# EUROPEAN PATENT APPLICATION

(11) **EP 4 618 494 A1**
(43) Date of publication of application: **17.09.2025**
(21) Application number: 24163397.3
(22) Date of filing: 13.03.2024
(51) Int. Cl.: H04L 41/0816, H04L 41/0866, H04L 41/147, H04L 41/16, H04L 41/0859

(54) **BEHAVIOUR LEARNER**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

Some examples of a method and apparatus are described, including: for each of a plurality of time instants, receiving operation data, wherein the operation data comprises a current configuration of an operation and an output of the operation, where the operation is computer-implemented functionality for managing a communications network or for managing a service deployed in a communications network; determining a performance label associated with the output of the operation; generating behaviour data comprising the operation data and the performance label; and storing the behaviour data in a behaviour repository. The method comprises simulating the operation using the stored behaviour data; and triggering change to the configuration of the operation in response to output of the simulation.

## Description

The present disclosure relates to computer-implemented operations for managing a communications network or for managing a service deployed in a communications network. The disclosure is particularly related to, but not limited to, learning the behaviour of the operation to simulate the operation.

### BACKGROUND

Computer-implemented operations for managing a communications network or for managing a service deployed in a communications network are often critical to enable high quality efficient communications network services.

A non-limiting example of such an operation is an automated function for predicting a number of requests received at a web server and taking load balancing action between the web server and neighbouring web servers using the predictions. Another non-limiting example of such an operation is apparatus for monitoring round trip time between a pair of nodes in a communications network and diverting traffic on another route in response to the round trip time exceeding a threshold.

When these types of computer-implemented operation fail or experience drops in performance there are significant consequences for the communications network or communications network services. It is difficult for engineers to determine the cause of the operation failure or performance drop and so difficult to troubleshoot and return the operation to acceptable performance levels.

The examples described herein are not limited to examples which solve problems mentioned in this background section.

### SUMMARY

Examples of preferred aspects and embodiments of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In a first aspect of the disclosed technology, there is provided a computer-implemented method comprising: for each of a plurality of time instants: receiving operation data, wherein the operation data comprises a current configuration of an operation and an output of the operation, where the operation is computer-implemented functionality for managing a communications network or for managing a service deployed in a communications network; determining a performance label associated with the output of the operation; generating behaviour data comprising the operation data and the performance label; storing the behaviour data in a behaviour repository; simulating the operation using the stored behaviour data; and triggering change to the configuration of the operation in response to output of the simulation. By generating and storing the behaviour data a behaviour repository is available which may be used by the simulator (such as a digital twin) to simulate the operation. The operation itself can then be automatically changed in configuration dynamically, so improving the effectiveness of the operation in managing the communications network, or the communications network service.

In some preferred examples, the method further comprises: determining whether to assign a second performance label to the simulated operation; assigning the second performance label to the simulated operation output in response to the determining. In an example the second performance label indicates whether or not the simulated output of the operation is acceptable or not. The second performance label is an efficient, compact representation which may be used to trigger the change to the configuration of the operation.

In some preferred examples, the first or second performance label is assigned to indicate a performance of the operation with the current configuration.

In some preferred examples, the method further comprises deploying a previous configuration of the operation if the second performance label indicates poor performance. This is particularly useful as it enables management of the communications network or communications network service to continue effectively, since the roll back is to a configuration that has been observed to work.

In some preferred examples, the storing the behaviour data in the behaviour repository comprises determining whether the behaviour data is similar to behaviour data already stored in the behaviour repository, and performing one of: updating an existing stored behaviour in response to determining the existing stored behaviour to be similar; or storing the behaviour as a new stored behaviour. Using a process of updating or storing new behaviours prevents the repository from becoming filled with duplicates and aids efficiency.

In some preferred examples, the determining whether the behaviour data is similar is performed based on Euclidean distance. Using a Euclidean distance metric is efficient and effective.

In some preferred examples, the receiving the operation data comprises receiving a notification of a change in configuration to the current configuration. This is particularly useful as often when there is a change in configuration of the operation there is a change in performance of the operation that needs to be managed.

In some preferred examples, the generating the behaviour data comprises cleaning the operation data, and segmenting the cleaned operation data. Cleaning helps prevent errors being introduced by outlying values or missing data. Segmenting facilitates processing of the operation data in preparation for generating the behaviour data by creating new smaller subsets of data based on a time window.

In some preferred examples, the generating the behaviour data comprises generating embeddings from the operation data. Embeddings are vectors representing the behaviour data in a multi dimensional space and these are concise and facilitate similarity searching.

In some preferred examples, the behaviour data is a vector. Using a vector format facilitates memory savings.

In some preferred examples, the operation is performed by an operation node comprising one or more service nodes, wherein the behaviour data further comprises data for the operation node and the one or more service nodes and a performance label for the operation node and each of the one or more service nodes.

In some preferred examples, the simulating comprises simulating the operation performed by the operation node and the one or more service nodes.

In another aspect of the disclosed technology, there is provided an apparatus comprising a processor and a memory, the memory storing instructions which when executed by the processor implement a method comprising: for each of a plurality of time instants: receiving operation data, wherein the operation data comprises a current configuration of an operation and an output of the operation, where the operation is computer-implemented functionality for managing a communications network or for managing a service deployed in a communications network; determining a performance label associated with the output of the operation; generating behaviour data comprising the operation data and the performance label; storing the behaviour data in a behaviour repository; simulating the operation using the stored behaviour data; and triggering change to the configuration of the operation in response to output of the simulation.

Preferably, simulating the operation comprises any one or more of: extrapolating the generated behaviour data, interpolating the generated behaviour data, using a machine learning model trained on the generated behaviour data.

Preferably, simulating the operation comprises simulating an output of the operation and labelling the simulated output using a plurality of classifiers.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

### BRIEF DESCRIPTION OF THE DRAWINGS

FIG. 1 is a schematic diagram of a computer-implemented operation being used to manage a managed entity;
FIG. 1A is a flow diagram of an example prediction operation;
FIG. 2 is a diagram of an example behaviour learner system;
FIG. 3 is a diagram of an example collector of a behaviour learner system;
FIG. 4 is a flow diagram of an example method for a data preparation stage of a behaviour learner system;
FIGs. 5A and 5B are flow diagrams of an example method for a model manager of a behaviour learner system;
FIG. 6 a flow diagram of an example method for a simulator of a behaviour learner system;
FIG. 7 is a flow diagram of an example method of learning the behaviour of an operation over time;
FIG. 8 is a schematic diagram of an example of a behaviour learner;
FIG. 9 is a schematic diagram of a computing-based device for implementing an operation controller and behaviour learner.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

Being able to learn and predict behaviour of an operation over time is useful for predicting problems that may occur in future or for predicting trends. For example, in artificial intelligence (Al) prediction operation, typically when a problem occurs, the mean time to repair the problem is long because it is not simple to find the root cause of problem. Additionally, problems may occur after an update to the configuration of the operation has been deployed after a period of time, either because the new configuration led to a new problem or did not fix the root cause, or because conditions have changed since the update was made. In this example, learning the behaviour of an Al prediction operation over time may help identify the root cause of a problem, in addition to predicting problems which may occur in future. Other examples of operations where learning the behaviour over time would be beneficial include website development and management, server management, hardware management, among others.

There is provided a behaviour learner which addresses the challenges described above. The behaviour learner creates a digital twin of the operation of concern. The digital twin is a representation of behaviour and configuration over time of the operation. The digital twin creates and updates models to represent the behaviour and configuration over time. A new digital twin may be created as changes occur to the behaviour or configuration of the operation being studied. The digital twin may be used to predict if poor behaviour will occur in the future. This may be used to predict whether a new configuration may result in poor results in advance. Additionally, if it finds that there may be poor results in the future, this may be used to take corrective actions to avoid the poor performance, for example by deploying or rolling back to an older tested configuration. The following description may apply to the operation being an AI prediction operation, or may equally apply to the prediction of any of the types of operations where learning the behaviour over time would be beneficial.

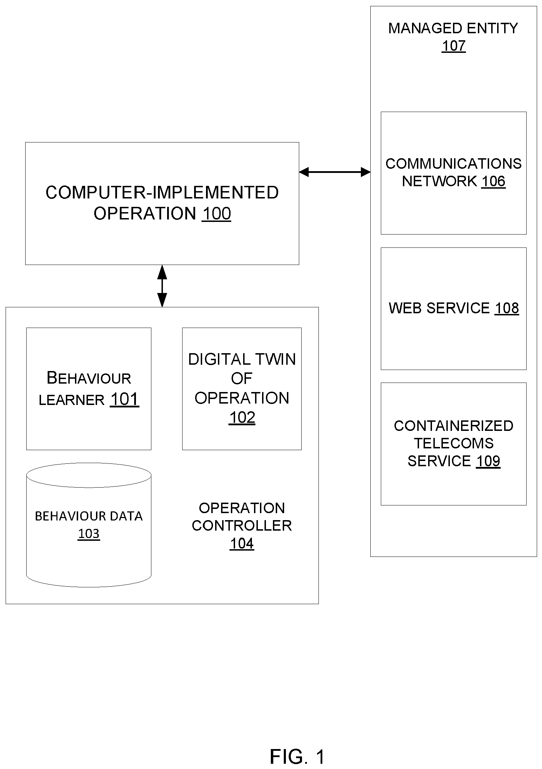

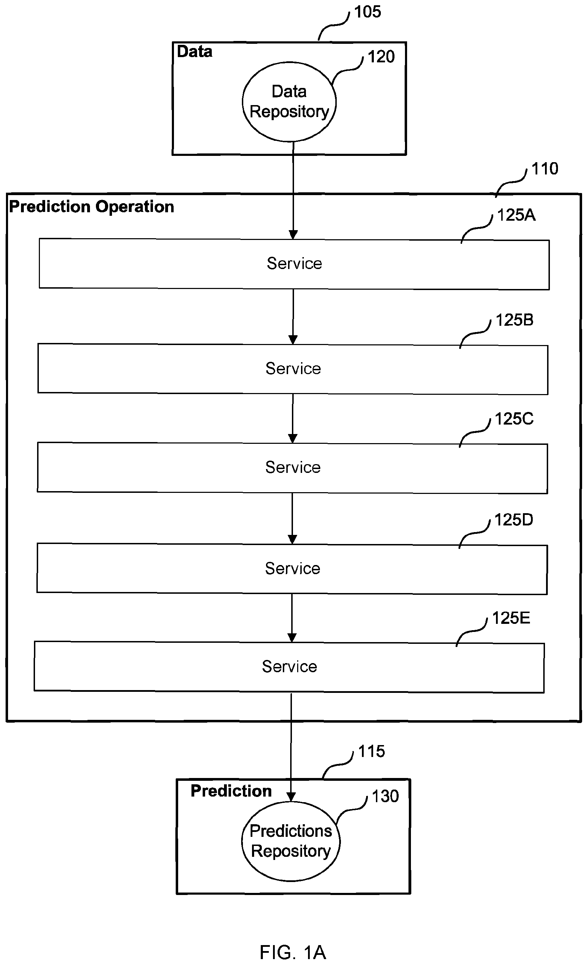

FIG. 1 shows a computer-implemented operation 100 for controlling a managed entity 107. The managed entity is a communications network 106, or a web service 108, or a containerized telecommunications service 109, or any other service deployed in a communications network. The computer-implemented operation 100 is functionality for controlling the managed entity 107. In an example, the operation 100 is functionality that monitors round trip time of packets between two nodes in the communications network 106 and controls routing of the packets to achieve load balancing when the round trip time exceeds a threshold. In another example, the operation 100 is machine learning functionality that predicts frequency of requests received at a web server and triggers deployment of additional web servers when the frequency of requests exceeds a threshold. The operation 100 is in communication with the managed entity 107 via a wired or wireless connection such as via a communications network.

The operation 100 is in communication with an operation controller 104. The operation controller 104 is computer implemented and comprises a behaviour learner 101, a digital twin of the operation 102 and a behaviour data 103 repository. The behaviour learner 101 observes output of the operation 100 and configuration of the operation 100. The behaviour learner 101 creates and stores behaviour data in the behaviour data 103 repository. The digital twin uses the behaviour data 103 in the repository to simulate the operation 100 and predict future outputs of the operation 100. The digital twin uses one or more of: interpolation, extrapolation, machine learning. The digital twin may comprise one or more classifiers which classify predicted future outputs of the operation 100 as being acceptable or not. The operation controller 104 uses the predicted outputs of the operation 100 and optionally the classifications of the predicted future outputs to trigger change of the operation 100. In this way the operation 100 is dynamically adjustable so as to effectively and efficiently manage the managed entity 107.

An example of an operation 100 is shown in FIG. 1A of the accompanying drawings. In this example the operation 100 is a machine learning operation. FIG. 1A shows an example AI prediction operation 110. Data 105 for the prediction operation is input into the prediction operation 110. In an example, the data 105 may be from a data repository 120. The operation 110 may be performed by an operation node comprising one or more service nodes. Figure 1A shows an example where the prediction operation may be performed by one or more services 125A-125E at one or more service nodes, each service 125A-125E configured to perform a part of the prediction operation. In this example, the operation comprises a service 125A for notifying new data for predictions, a service 125B for checking data against expectations, a service 125C for transforming data for the prediction, a service 125D for running the prediction, and a service 125E for saving the prediction. The output of the operation, the prediction 115, is saved into a prediction repository 130. In an example, the prediction repository 130 is storage element or a cloud storage.

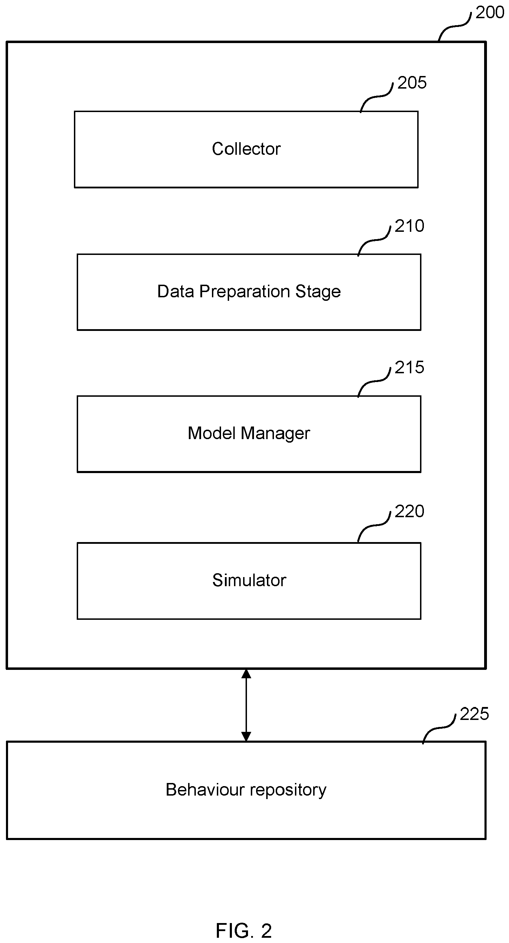

FIG. 2 is an example diagram of a behaviour learner 101 digital twin 102 and operation controller 104. The apparatus 200 comprises a collector 205, a data preparation stage 210, a model manager 215 and a simulator 220. The apparatus is implemented in any one or more of software, firmware, hardware. The apparatus is in communication with a behaviour repository 225. The behaviour repository 225 is, in some examples, distributed or located remotely and accessed via a network or other communication link. In some examples, the apparatus comprises the behaviour repository 225.

The behaviour learner 101 creates a digital twin model of the AI prediction operation model of FIG. 1A. The behaviour learner is a virtual representation of behaviour and configuration of the operation over time. The behaviour learner captures the changes that occur in the operation behaviour over time, creating and updates behaviour models to represent them. New versions of these behaviour models are created as changes occur on the operations behaviour and its configuration. The behaviour models are used to simulate the operation over time.

In an example, the behaviour learner may deploy a previous configuration when the simulation forecasts problems with the operation in the future. This provides proactively rolling back to a previous configuration with less problems if the new configuration has many predicted future problems, which avoids a reduction in performance of the operation. Additionally, by not keeping the configuration which has many predicted future problems, it provides an indication of the configuration change that would have lead to future problems, thus avoiding a time consuming manual investigation when debugging the operation in the future.

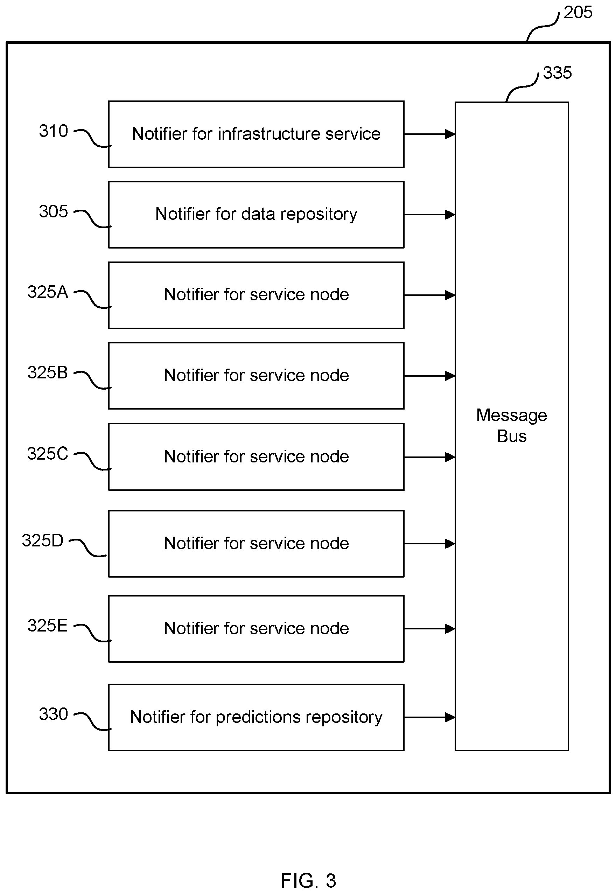

FIG. 3 shows an example of the collector 205 which may be implemented in an apparatus for predicting the behaviour of the operation of FIG. 1A. The collector 205 may capture data such as metrics, events and configurations, for example from the input data, the operation and/or each service.

In an example, the collector comprises notifiers to collect data from the input data, the operation and/or each service. In some examples, the collector 205 includes a notifier 310 for the infrastructure service, which notifies when there is a source code repository change. In some examples, the collector 205 includes a notifier 305 for the data repository, which notifies events and metrics from the data repository 105. In some examples, the collector 205 includes notifiers 325A-325E, which notifies events and metrics from the services 125A-125E. In some examples, the collector 205 includes a notifier 330, which notifies events and metrics from the predictions repository 130.

In an example, the collector 205 captures the data using a message bus 335. In an example, the message bus 335 receives the data synchronously or asynchronously.

In an example, the configurations may be written wholly as infrastructure as code or wholly written in other technologies that setup the data and application on top of the infrastructure. In an example, the configurations may be written partly as infrastructure as code and partly written in other technologies that setup the data and application on top of the infrastructure.

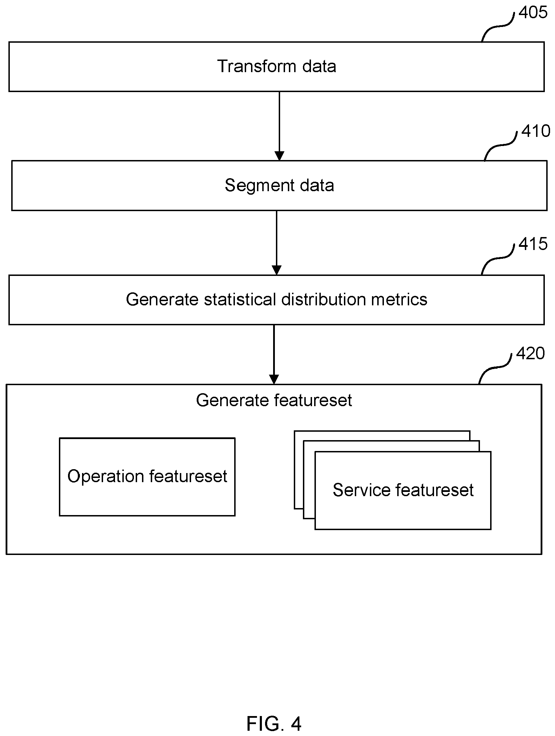

FIG. 4 shows an example of the operations of the data preparation stage 210.

The data preparation stage 210 may transform 405 the data captured by the collector into a format suitable for processing by the operation. In an example, the data preparation stage 210 cleans the data. In an example, cleaning the data comprises one or more of removing duplicate or missing values, or correcting format of the data, or any other process as would be understood by the person skilled in the art.

In an example, the data preparation stage 210 segments 410 the data by a set time window. In an example, the data preparation stage 210 includes a selector determining whether the collected data is batch data or streaming data. When the data is batch data, the time window for the segmentation may be the duration of the batch prediction. When the data is streaming data, the time period for segmentation may be a predetermined time period. An example of the predetermined time window for segmentation is 24 hours.

In an example, the data preparation stage 210 generates 415 statistical metrics for the segmented data. For example, the calculated statistical metrics may include the count, mean, standard deviation, minimum, maximum or percentiles.

In an example, the data preparation stage 210 generates 420 a featureset, wherein a featureset comprises the time window data and the statistical metrics for the segmented data. In an example, an operation featureset 425 is generated for the operation. In an example, one service featureset 430 is generated for each service of the operation. The featureset generated by the data preparation stage 210 is output to the model manager 215.

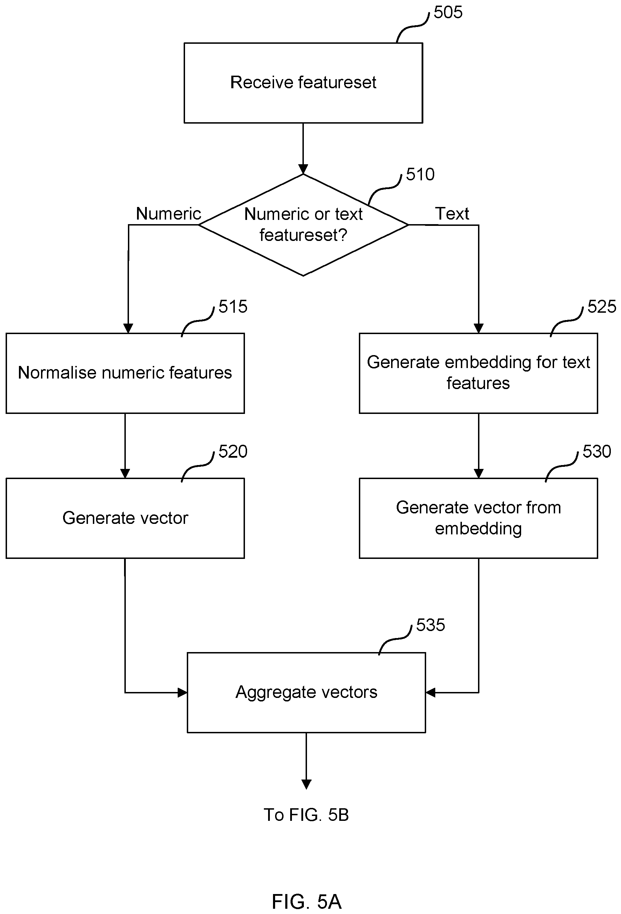

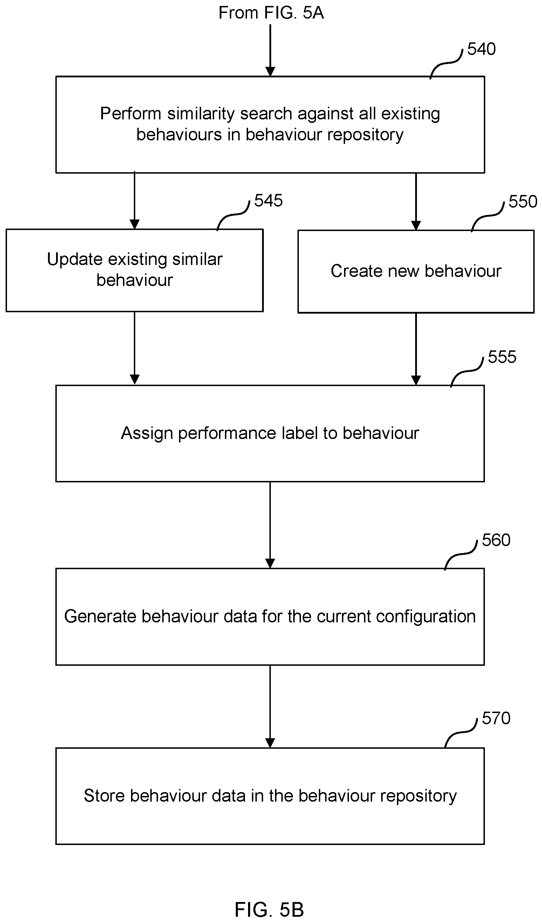

FIG. 5A and FIG. 5B show an example of the process performed by the model manager 215. The model manager 215 may create and manage behaviours of the operation. In an example, the model manager may create and manage a behaviour model. The model manager 215 may be in communication with a behaviour repository 225, wherein the model manager 215 stores behaviours of the operations in the behaviour repository 225. The model manager 215 may access the behaviour repository 225 when the process of creating a behaviour associated with a particular configuration. The behaviour repository 225 is, in some examples, distributed or located remotely and accessed via a network or other communication link.

By saving configurations with associated behaviours in the behaviour repository, there is provided a convenient reference for behaviours of particular configurations the operation. This may be used to identify, for example, better configurations to be used, or configurations that are known to be less reliable over time.

Referring to FIG. 5A, in an example, the model manager 215 processes featuresets from the data preparation stage 210 to create a vector from the featuresets. In some examples, the data preparation stage 210 creates an operation vector from the operation featureset and a service vector from each service featureset. In an example, at 505, the model manager 215 receives a featureset from the data preparation stage 210. In an example, at 510, the model manager 215 determines whether the featureset comprises numeric features or text features. In an example, at 515, when the featureset includes numeric features, the featureset is normalised, and at 520, the vector is generated. In an example, when the featureset includes text features, at 525 the model manager generates embeddings such as using Word2Vec or any other encoder for encoding text to embedding vectors, and at 530 stores a vector (the embeddings are vectors). In some examples, the embeddings may be generated using an embedding model. In some examples, the text feature may be split into two or more smaller text features before or after the embeddings are generated, for example when the text feature comprises more than one word. At 535, the generated vectors are aggregated for the process shown in FIG. 5B.

Referring to FIG 5B, at 540, the vector is used to search for the most similar existing behaviours in the behaviour repository 225 for a particular configuration. In an example, the aggregated vectors of FIG. 5A are used for a similarly search performed against all existing behaviours, represented as vectors, in the repository for the current configuration version of the operation. For example, all behaviours for the current configuration version are searched by inputting the full aggregated vector. The most similar behaviour for the current configuration is determined based on a similarity measure between vectors, for example by using Euclidean distance or other distance measure. If the distance is found to be below a threshold the featureset is found to be similar to an existing behaviour in the behaviour repository. At 545, if a similar behaviour is found, the similar behaviour is updated with the current configuration. At 550, if a similar behaviour is not found, then a new behaviour is created.

At 555, the model manager 215 assigns a performance label to the behaviour. In an example, the model manager 215 may assign multiple performance labels to the behaviour. In an example, the performance label is assigned by sending the operation data to a performance classifier which is a rule-based classifier or a machine learning classifier. In an example, the performance classifier identifies whether a particular type of performance is present in the operation data. In an example, a performance label is determined by the model manager 215 or the performance classifier by creating an individual model for each service and a model for the whole operation, wherein the models are trained for each new time window of data. The performance label is used to label the behaviours. In an example, a performance label is an indication of the performance of the operation. In an example, a performance label indicates the performance of a particular component when the operation is run. For example, the performance label may be associated with the performance of utilisation such as disk usage or disk I/O. In an example, a performance label recognises a particular type of poor performance. Poor performance may include, and is not limited to, a slow response or an error response. In an example, a performance label includes an indication that the operation is taking longer than a predetermined time, the operation is outputting incorrect results, the operation is failing, or another indication of poor performance. In an example, the performance labels are text labels. In an example, the performance label is generated by a machine learning model. In an example, the machine learning model is trained using historical configuration data, which may be for the current version of the operation.

At 560, the model manager 215 generates behaviour data for the current configuration. The behaviour and performance level together comprise a behaviour data. In an example, the behaviour data is for a particular configuration of the configuration version. In an example, the behaviour data for a configuration comprises the configuration, operation vector, operation featuresets, operation models and performance labels of the operation. In an example, the behaviour data further comprises a configuration for the service, service vector, service featureset, service model and performance label for each service in the operation. In an example, the behaviour data is stored in the behaviour repository.

At 570, the model manager 215 stores the behaviour data in the behaviour repository 225. In an example, each behaviour data in the behaviour repository 225 has a preset time to live, which decreases over time. When the most similar behaviour is identified, the time to live for the identified behaviour is increased. The time to live for a behaviour may decrease, for example because the behaviour is rare and has not reoccurred in another configuration in the current version. In an example, the behaviour is deleted from the behaviour repository when the time to live expires and there is no time remaining. In an example, the behaviour data is managed by a behaviour lifecycle manager. The behaviour lifecycle manager may be part of the model manager 215 or be external to the model manager 215. With a time to live associated with each behaviour, the proportion of memory of the behaviour repository may be managed, and a failure of the system from lack of memory in the behaviour repository may be avoided.

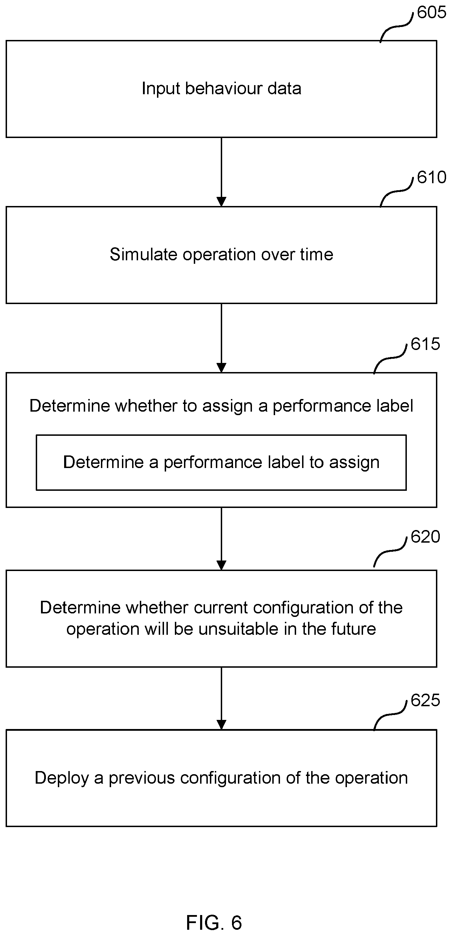

FIG. 6 shows an example of operations performed by the simulator 220. The simulator 220 may use the behaviours from the model manager 215 to predict future behaviour. In an example, the simulator 220 may use models to generate forecasts of future problems. In an example, the simulator 220 may use one or more of: a linear regression model, or extrapolation, or interpolation, or machine learning, or other forecasting algorithms, such as, but not limited to, simple or Holt's exponential smoothing or autoregressive integrated moving average (ARIMA) model. The simulator 220 may be used to identify whether a configuration performs well over time or whether the performance may reduce over time. By simulating the performance over time, it can be verified that an updated configuration does not affect the performance of the operation adversely over time. Additionally, if a configuration is being updated in order to fix an existing problem, the simulation may verify that additional problems are not being unintentionally introduced, or that the existing problem does not reoccur at some point in the future.

In an example, at 605, the simulator 220 inputs the behaviour data from model manager 215 into a behaviour model. At 610, the simulator 220 simulates the operation over time. For example, the simulator 220 simulates the behaviour of the operation node with a model, and simulates the behaviour of each service node with a model each. The simulation time may be set manually or may be predetermined. In an example, the simulator may set a time iterator over which to simulate the behaviour. In an example, the model prediction of the state of the operation at the simulation time for each featureset of the behaviour data is obtained. In an example, the model prediction is obtained for the operation node and for each service node.

In an example, at 615, the simulator 220 determines whether to assign a performance label to the simulated operation. In an example, the assignment of a performance label is performed in the same way as the model manager 215 assigning a performance label, as described above. In an example, the simulator 220 assigns multiple performance labels to the simulated operation. In an example, the simulator does not assign an additional performance label or does not change the performance label from the behaviour data.

At 620, the simulator 220 determines whether the assigned performance labels indicate the simulated operation unsuitable for use in the future. For example, the simulator 220 may determine that the simulated operation is unsuitable if there are more than a predetermined number of performance labels assigned to the simulated operation. In other example, the simulator may determine that the simulated operation is unsuitable if a particular performance label is assigned to the simulated operation.

If the simulator 220 determines that the simulated operation is unsuitable for future use, in an example, at 625 the simulator 220 may change the configuration of the operation to a previous known safe configuration. For example, the simulator 220 may roll back the operation to a previously used configuration which was found acceptable. In an example, the deployment of a previous configuration may be performed automatically in response to the simulated operation being assigned a performance label indicating poor performance. By deploying a previous configuration or another known safe configuration, and removing the current simulated configuration from being active, the simulated poor performance may be avoided.

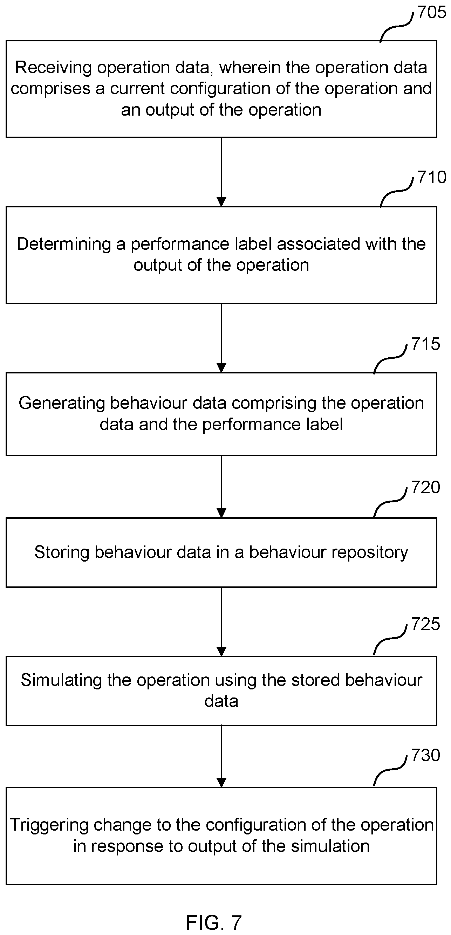

FIG. 7 shows an example flow diagram for the method 700 learning the behaviour of an operation over time. The method 700 may be performed for each of a plurality of time instants. At 705, the method includes receiving operation data, wherein the operation data comprises a current configuration of the operation and an output of the operation, where the operation is computer-implemented functionality for managing a communications network or for managing a service deployed in a communications network. At 710, the method includes determining a performance label associated with the output of the operation. At 715, the method includes generating behaviour data comprising the operation data and the performance label. At 720, the method includes storing behaviour data in a behaviour repository. At 725, the method includes simulating the operation using the stored behaviour data. At 730, the method includes triggering change to the configuration of the operation in response to output of the simulation.

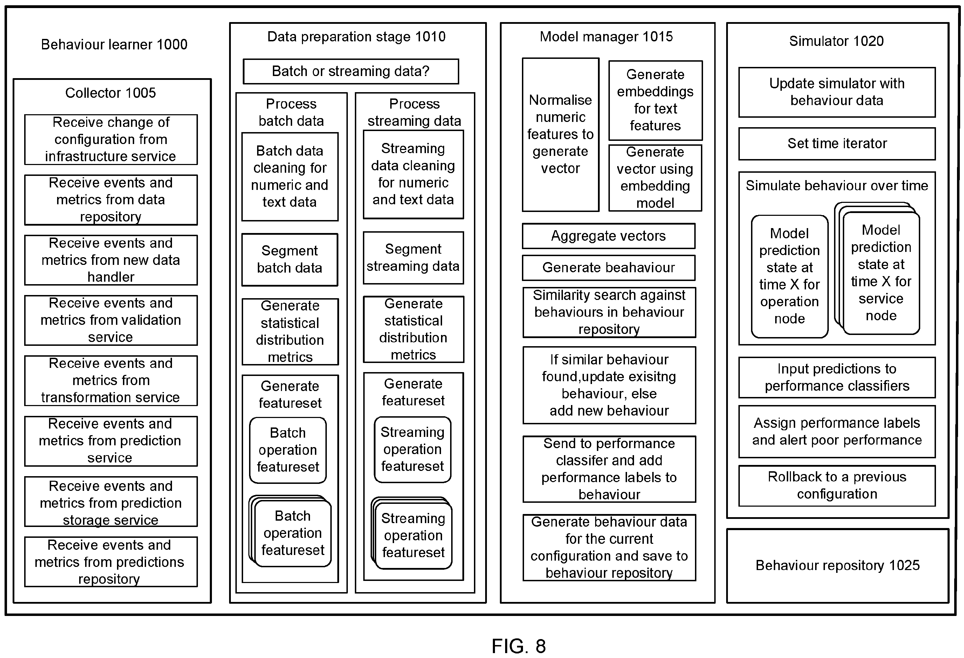

FIG. 8 shows an example behaviour learner 1000. The behaviour learner 1000 may be, for example, behaviour learner 200. The behaviour learner 1000 may be implemented, in an example, on computing device 900. The behaviour learner 1000 comprises a collector 1005, a data preparation stage 1010, a model manager 1015, a simulator 1020 and a behaviour repository 1025.

The behaviour learner 1000 may be configured to learn the behaviour of an AI prediction operation. The AI prediction operation be implemented by an operation node which may include service nodes including a new data handler, a validation service, a prediction service and a prediction storage service. The AI prediction operation may be in communication with a data repository and a predictions repository. The AI prediction operation may be hosted by an infrastructure service.

The collector 1005 of the behaviour learner 1000 captures data of the AI prediction operation by receiving a change of configuration to a current configuration from the infrastructure service. The collector 1005 may capture data of the AI prediction operation by receiving events and/or metrics from one or more of the data repository, the new data handler, the validation service, the prediction service, the prediction storage service and the predictions repository. The collector 1005 may receive the configuration, events and/or metric synchronously or asynchronously. In an example, the collector 1005 captures the data using a message bus.

The data preparation stage 1010 determines whether the data captured by the collector 1005 is batch data or streaming data. The data preparation stage 1010 processes the captured data according to whether it is batch data or streaming data. The data preparation stage 1010 cleans the data, segments the data, generates statistical distribution metrics, and generates featuresets. In an example, the data preparation stage 1010 generates one featureset for the operation node and one featureset for each service node. In an example, one operation featureset is generated for a given configuration of the Al prediction operation, and a plurality of featuresets are generated for the same configuration of the Al prediction operation.

The model manager 1015 may process the featuresets generated by the data preparation stage 1010 according to whether the features in the featuresets are numeric values or text values. With numeric values, the numeric values are normalised to generate a vector. With text values, the model manager generates embeddings associated with the text values, and generates a vector from the generated embeddings. In an example, an embedding model is used to generate the embeddings. The generated vectors are aggregated to generate a behaviour. A similarity search is performed on the generated behaviour against existing behaviours in the behaviour repository 1025. If a similar behaviour is found in the behaviour repository 1025, the found behaviour is updated to include the current configuration. If a similar behaviour is not found, a new behaviour is created. The behaviour is sent to a performance classifier. The performance classifier assigns a performance label to the behaviour. In an example, the behaviour is sent to multiple performance classifiers. In an example, the performance classifier uses a machine learning model. In an example, there is a performance classifier for each performance label. When the performance label is assigned to the behaviour, a behaviour data is generated. The generated behaviour data which may include performance labels and behaviours of operation node and each service node of the AI prediction operation with the current configuration. This behaviour data is saved to the behaviour repository 1025.

The simulator 1020 may update its parameters with the behaviour data generated by the model manager 1015. The simulator 1020 may set a time iterator in accordance with the desired simulation time. The simulator 1020 simulates the AI prediction operation with the current configuration for the time set by the time iterator, using the behaviour data generated by the model manager 1015. In this way, a model prediction state at a future time X for the operation node and each service node of the AI prediction operation is simulated. The simulated prediction is sent to the performance classifier, and performance labels are assigned to the simulated prediction. If the performance labels indicate poor performance at the future time X, the simulator 1020 may roll back the configuration of the AI prediction operation to a previous configuration. If the simulator 1020 deploys a previous configuration of the AI prediction operation, the AI prediction operation continues to operate using the deployed previous configuration. Otherwise, if there is no roll back, the AI prediction operation continues to operate using the current configuration.

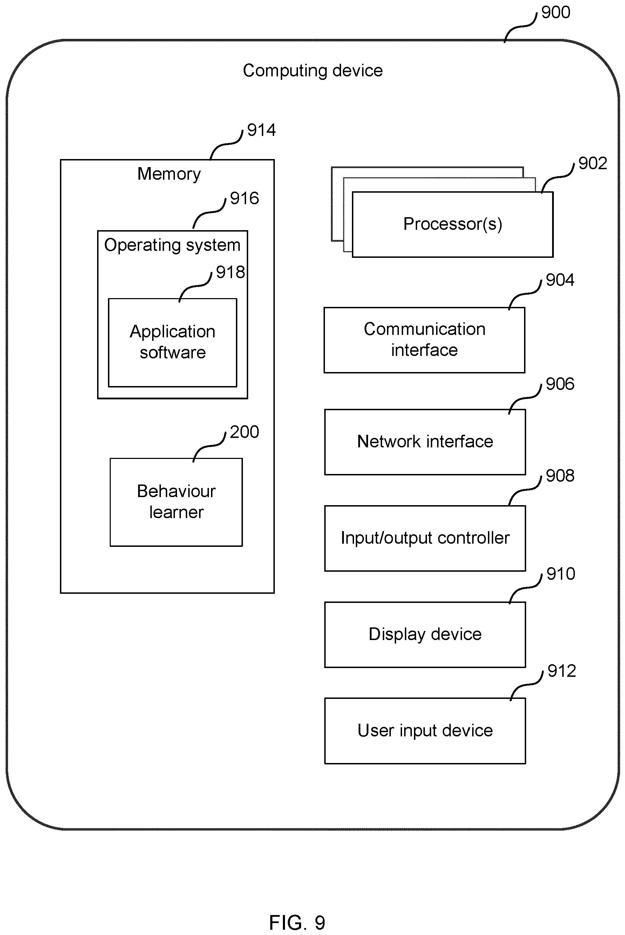

FIG. 9 illustrates various components of an example computing device 900 in which the behaviour learner and/or operation controller are implemented in some examples. The computing device is of any suitable form such as a smart phone, a desktop computer, a tablet computer, a laptop computer.

The computing device 900 comprises one or more processors 902 which are microprocessors, controllers or any other suitable type of processors for processing computer executable instructions to control the operation of the device in order to perform the methods described herein including of figures 4 to 7. In some examples, for example where a system on a chip architecture is used, the processors 902 include one or more fixed function blocks (also referred to as accelerators) which implement a part of the method of figures 4 to 7 in hardware (rather than software or firmware). That is, the methods described herein are implemented in any one or more of software, firmware, hardware. The computing device has a data store holding configurations for the operation and other data. The computing device has the behaviour learner within the memory 914. Platform software comprising an operating system 916 or any other suitable platform software is provided at the computing-based device to enable application software 918 to be executed on the device. Although the computer storage media (memory 914) is shown within the computing-based device 900 it will be appreciated that the storage is, in some examples, distributed or located remotely and accessed via a network or other communication link (e.g. using communication interface 904).

The computing-based device 900 also comprises an input/output controller 908 arranged to output display information to a display device 910 which may be separate from or integral to the computing-based device 900. The display information may provide a graphical user interface. The input/output controller 908 is also arranged to receive and process input from one or more devices, such as a user input device 912 (e.g. a mouse, keyboard, camera, microphone or other sensor). In some examples the user input device 912 detects voice input, user gestures or other user actions. In an embodiment the display device 910 also acts as the user input device 912 if it is a touch sensitive display device. The input/output controller 908 outputs data to devices other than the display device in some examples.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A computer-implemented method comprising:
for each of a plurality of time instants:
receiving operation data, wherein the operation data comprises a current configuration of an operation and an output of the operation, where the operation is computer-implemented functionality for managing a communications network or for managing a service deployed in a communications network;
determining a performance label associated with the output of the operation;
generating behaviour data comprising the operation data and the performance label;
storing the behaviour data in a behaviour repository;
simulating the operation using the stored behaviour data; and
triggering change to the configuration of the operation in response to output of the simulation.

2. The method as claimed in claim 1, further comprising:
determining whether to assign a second performance label to the simulated operation;
assigning the second performance label to the simulated operation output in response to the determining.

3. The method of any preceding claim, wherein the first or second performance label is assigned to indicate a performance of the operation with the current configuration.

4. The method as claimed in claims 2 or 3, further comprising deploying a previous configuration of the operation if the second performance label indicates poor performance.

5. The method as claimed in any preceding claim, wherein the storing the behaviour data in the behaviour repository comprises determining whether the behaviour data is similar to behaviour data already stored in the behaviour repository, and performing one of:
updating an existing stored behaviour in response to determining the existing stored behaviour to be similar; or
storing the behaviour as a new stored behaviour.

6. The method as claimed in claim 5, wherein the determining whether the behaviour data is similar is performed based on Euclidean distance.

7. The method as claimed in any preceding claim, wherein the receiving the operation data comprises receiving a notification of a change in configuration to the current configuration.

8. The method as claimed in any preceding claim, wherein the generating the behaviour data comprises cleaning the operation data, and segmenting the cleaned operation data.

9. The method as claimed in any preceding claim, wherein the generating the behaviour data comprises generating embeddings from the operation data.

10. The method as claimed in any preceding claim, wherein the behaviour data is a vector.

11. The method as claimed in any preceding claim, wherein the operation is performed by an operation node comprising one or more service nodes, wherein the behaviour data further comprises data for the operation node and the one or more service nodes and a performance label for the operation node and each of the one or more service nodes.

12. The method as claimed in claim 11, wherein the simulating comprises simulating the operation performed by the operation node and the one or more service nodes.

13. An apparatus comprising a processor and a memory, the memory storing instructions which when executed by the processor implement a method comprising:
for each of a plurality of time instants:
receiving operation data, wherein the operation data comprises a current configuration of an operation and an output of the operation, where the operation is computer-implemented functionality for managing a communications network or for managing a service deployed in a communications network;
determining a performance label associated with the output of the operation;
generating behaviour data comprising the operation data and the performance label;
storing the behaviour data in a behaviour repository; and
simulating the operation using the stored behaviour data; and
triggering change to the configuration of the operation in response to output of the simulation.

14. The apparatus of claim 13, wherein simulating the operation comprises any one or more of: extrapolating the generated behaviour data, interpolating the generated behaviour data, using a machine learning model trained on the generated behaviour data.

15. The apparatus of claim 14 wherein simulating the operation comprises simulating an output of the operation and labelling the simulated output using a plurality of classifiers.
